# EUROPÄISCHE PATENTSCHRIFT

(11) **EP 3 962 778 B1**
(45) Veröffentlichungstag und Bekanntmachung des Hinweises auf die Patenterteilung: **26.03.2025**
(21) Anmeldenummer: 20728397.9
(22) Anmeldetag: 30.04.2020
(51) Int. Cl.: B60P 3/34, B60P 3/38

(54) **FAHRZEUG MIT DROP-STITCH MÖBEL**
VEHICLE WITH DROP-STITCH FURNITURE
VÉHICULE AVEC DU MEUBLE DE TYPE « DROP STITCH ».

(30) Priorität: 30.04.2019 DE 102019111203
(43) Veröffentlichungstag der Anmeldung: 09.03.2022
(73) Patentinhaber: Erwin Hymer Group SE, 88339 Bad Waldsee (DE)
(72) Erfinder: BUCK, Rainer, 88239 Wangen i. Allgäu (DE); METZLER, Marcus, 88339 Bad Waldsee (DE); DORN, Günter, 88282 Schlier (DE)
(74) Vertreter: Müller Schupfner & Partner Patent- und Rechtsanwaltspartnerschaft mbB (Muc)
(86) Internationale Anmeldenummer: PCT/EP2020/062175
(87) Internationale Veröffentlichungsnummer: WO 2020/221912

(56) Entgegenhaltungen:
- EP-A1- 2 878 231
- EP-A2- 2 767 436
- DE-U1- 202006 005 723
- GB-A- 2 519 528
- GB-A- 2 566 313
- US-A1- 2013 015 690

## Beschreibung

Die Erfindung betrifft ein Fahrzeug mit drop-stitch Möbel.

Im Sinne der Erfindung ist unter einem Fahrzeug insbesondere ein Wohnmobil, Wohnwagen oder dergleichen Reise- oder Freizeitfahrzeug zu verstehen. Derartige Fahrzeuge sind aus dem Stand der Technik hinlänglich bekannt. Es ist weiterhin bekannt, dass solche Fahrzeuge Möbel umfassen. Beispielsweise umfassen die bekannten Fahrzeuge ein oder mehrere Betten mit jeweils entsprechender Liegefläche, um darauf zu verweilen, beispielsweise zu Ruhezwecken. Problematisch an den Möbeln, die in Wohnmobilen, Wohnwägen, etc. verwendet werden ist oftmals, dass diese mehr oder weniger raumfüllend sind und bei Nichtgebrauch somit das Bedürfnis einer verbesserten Raumnutzung besteht.

Aus der EP 2 767 436 A2 ist ein Wohnmobil mit einer Bettanordnung bekannt. Die Bettanordnung weist eine aufblasbare Matratze auf.

Aus der GB 2519528 ist ein aufblasbares Bett bekannt, das ein Drop-Stitch-Material aufweist.

Aus der GB 2566313 ist ein aufblasbares Panel mit einem Drop-Stitch-Material bekannt. DE 20 2006 005723 U1 offenbart ein Bettgestel in einem Fahrzeug.

Aufgabe der vorliegenden Erfindung ist es, ein Wohnmobil, Wohnwagen oder dergleichen Reise- oder Freizeitfahrzeug bereitzustellen, das verbesserte, insbesondere flexiblere Raumnutzungsmöglichkeiten, vorzugsweise bei einer verbesserten Stabilität ermöglicht.

Diese Aufgabe wird durch ein Wohnmobil, Wohnwagen oder dergleichen Reise- oder Freizeitfahrzeug gemäß Anspruch 1 gelöst.

Ausgehend von einem Wohnmobil, Wohnwagen oder dergleichen Reise- oder Freizeitfahrzeug mit einem Wohnbereich und/oder einem Fahrbereich ist erfindungsgemäß vorgesehen, dass zumindest ein Möbel umfasst ist, das aus einem drop-stitch Material gefertigt ist oder wenigstens einen Bestandteil aufweist, der ein drop-stitch Material umfasst.

Derartige Möbel sind als aufblasbare Möbel ausgebildet und können bei Nichtgebrauch entsprechend einfach und sehr kompakt demontiert und beispielsweise bis zu einer erneuten Verwendung besonders platzsparend aufbewahrt werden. Insofern kann der Raum bzw. der Ort bzw. Platz, in dem das aufblasbare Möbel angeordnet ist oder war, bei zumindest vorübergehendem Nichtgebrauch des Möbels anderweitig verwendet werden, wodurch Möglichkeiten der verschiedenen Ausnutzung des Raums, insbesondere Wohnraum, d.h. Raum im Wohnbereich und/oder Raum im Fahrbereich deutlich erhöht werden können. Dies bedeutet zugleich, dass die Nutzungsmöglichkeiten des Wohnmobils, Wohnwagens, etc. deutlich verbessert werden können.

Es ist für den Fachmann hierbei erkennbar, dass ein Wohnmobil einen Fahrbereich umfasst, wohingegen dies bei einem Wohnwagen nicht vorgesehen ist.

Drop-stitch kennt der Fachmann. Dabei handelt es sich in der Regel um zwei Kunststoff-Schichten, die mit Nylonfäden verwoben sind. Das Prinzip der drop-stitch-Konstruktion beruht darauf, Decken- und Bodenseiten des entsprechenden Gegenstands mit vertikalen Verbindungsfasern zu verknüpfen und unter hohem Innendruck in der gewünschten Form zu halten. Es kann hierdurch ein Gewebe erhalten werden, welches durch eine große Zahl an Verknotungen sehr reißfest und formstabil ist und hohen Belastungen standhalten kann.

In einer besonders vorteilhaften Ausgestaltung der Erfindung kann vorgesehen sein, dass das Möbel als Bettgestell ausgebildet ist. Diese Möbel sollen ganz bevorzugt als aufblasbare Möbel, d.h. als Möbel aus einem drop-stitch Material gefertigt oder wenigstens einen Bestandteil aufweisend, vorhanden sein, da Bett bzw. Bettgestell in der Regel sehr viel Platz bzw. Raum im Fahrzeug, d.h. im Wohnmobil, Wohnwagen, etc. einnehmen und somit entsprechend einschränkend im Hinblick auf den verbleibenden Platz bzw. Raum sind.

Dadurch, dass das Bett bzw. das Bettgestell oder auch eine Kombination aus Bett und Bettgestell, die als entsprechendes Möbel im Sinne der Erfindung aufgefasst werden kann, als entsprechendes platzsparendes und überdies besonders einfach und schnell auf- und abbaubares Möbel im Wohnmobil, Wohnwagen, etc. im Wohnmobil, Wohnwagen, etc. verwendet werden, kann ein entsprechendes Reise- oder Freizeitfahrzeug bereitgestellt werden, das verbesserte, insbesondere flexiblere Raumnutzungsmöglichkeiten ermöglicht.

Ganz besonders bevorzugt kann in einer Weiterbildung der Erfindung vorgesehen sein, dass das Bett, insbesondere Bettgestell eine Matratze umfasst, wobei die Matratze als aufblasbare, insbesondere als selbstaufblasbare Matratze ausgebildet ist. Auf diese Weise kann die weitere vorteilhafte Wirkung eines deutlich verbesserten Liege- bzw.

Schlafkomforts erzielbar sein, da die tragenden Eigenschaften des drop-stitch Materials mit flexiblen Eigenschaften einer beispielsweise mit Luft aufblasbaren Matratze kombiniert werden. Selbstaufblasbare Matratzen haben dabei den zusätzlichen Vorteil vereinfachter Errichtung.

In einer praktikablen Ausgestaltung der Erfindung kann vorgesehen sein, dass das Möbel wenigstens ein Befestigungsmittel zum Befestigen des Möbels an dem Wohnmobil, Wohnwagen oder dergleichen Reise- oder Freizeitfahrzeug umfasst. Dadurch kann ein unbeabsichtigtes Bewegen des Möbels unterbunden werden, wodurch auch die Sicherheit für einen Benutzer erhöht werden kann. Weiterhin kann vorgesehen sein, dass das Befestigungsmittel Ösen umfasst, die an dem Möbel angeordnet sind und wobei das Befestigungsmittel ferner ein Haltemittel, insbesondere Halteband umfasst. Damit kann beispielsweise eine Aufhängemöglichkeit des Möbels im Fahrzeug erzielbar sein, wodurch auf platzsparende Weise flexibler Raum im Wohnmobil, Wohnwagen, etc. einfach errichtbar ist. Ebenso einfach ist bei Nichtgebrauch des Möbels anderweitig nach Demontage des Möbels der freiwerdende Raum anderweitig nutzbar.

Um die Montage bzw. Demontage eines komfortablen Schlafmöbels, d.h. eines Bettes, weiter zu vereinfachen, kann im Rahmen der Erfindung vorgesehen sein, dass die Matratze und das Bett, insbesondere Bettgestell mittels wenigstens eines Befestigungsmittels lösbar miteinander verbunden sind, wobei das wenigstens eine Befestigungsmittel vorzugsweise ein Klettmaterial umfasst.

Besonders einfach und schnell kann das Möbel bei Nichtgebrauch in platzsparender Weise verstaubar sein, wenn das Bett, insbesondere das Bettgestell an einem vorzugsweisen aufklappbaren Schrank, insbesondere Oberschrank befestigt ist. Bei einer Befestigung an einem Oberschrank kann zudem eine Errichtung des Bettes bzw. Bettgestells schwebend im Raum des Fahrzeugs erfolgen.

Zur zusätzlichen Bereitstellung weiterer Stabilität kann in einer Weiterbildung der Erfindung vorgesehen sein, dass das Bett, insbesondere Bettgestell zur Bereitstellung einer Liegefläche zusätzlich an einem Haltemittel, das im Wohnmobil, Wohnwagen oder dergleichen Reise- oder Freizeitfahrzeug angeordnet ist, befestigt ist.

In Kombination mit einem Bett, insbesondere Bettgestell, das an einem vorzugsweisen aufklappbaren Schrank, insbesondere Oberschrank befestigt ist, kann auf besonders einfache und platzsparende Weise eine Errichtung und insbesondere eine Vollständige Anordnung des Bettes bzw. Bettgestells schwebend im Raum des Fahrzeugs erfolgen. Hierdurch kann auch ermöglicht werden, unterhalb eines schwebend im Raum angeordneten Bettes, insbesondere Bettgestells angeordnete Möbel unverändert belassen zu können und somit ein Wohnmobil, Wohnwagen, etc. mit merklich verbesserten Raumnutzungsmöglichkeiten bereitstellen zu können. Eine weitere Ausgestaltung der Erfindung kann vorsehen, dass das Bett, insbesondere das Bettgestell eine polygonale Form mit mindestens 6, bevorzugt 8, besonders bevorzugt 12 Ecken aufweist. Hierdurch kann eine geometrische Anpassung des Bettes, insbesondere Bettgestells an die räumlichen Gegebenheiten erfolgen beispielsweise eine (Anpassung der Bettgeometrie z.B. an die räumliche Ausgestaltung des Fahrbereichs. Somit kann der Platz bzw. der Raum im Fahrzeug, d.h. im Wohnmobil bzw. Wohnwagen, etc. optimal durch das flexible, da aufblasbare Möbel ausgefüllt werden, woraus insgesamt deutlich verbesserte insbesondere flexiblere Raumnutzungsmöglichkeiten ermöglicht werden können.

Möglich kann im Rahmen der Erfindung sein, dass das Bett, insbesondere Bettgestell derart im Fahrbereich angeordnet ist, dass eine Liegefläche im Fahrbereich ausgebildet ist, wobei vorzugsweise die Liegefläche an die Geometrie des Fahrbereichs angepasst ist. Somit kann die Liegefläche im Fahrbereich bestmöglich ausgenutzt werden. Daraus können deutlich verbesserte Raumnutzungsmöglichkeiten des Wohnmobils erzielt werden.

Eine besonders bevorzugte Ausgestaltung der Erfindung kann dabei auch vorsehen, dass das Bett, insbesondere das Bettgestell im Wohnbereich eine Liegefläche bildet, die wenigstens teilweise auf einem Sitzmöbel des Wohnbereichs, vorzugsweise Sitzbank, und einem Sitzmöbel des Fahrbereichs, insbesondere Fahrersitz, angeordnet ist, insbesondere begrenzend angeordnet ist. Eine derartig angeordnete und ausgestaltete Liegefläche kann in einem Wohnmobil dazu führen, dass Raumnutzungsmöglichkeiten des Wohnmobils signifikant erhöht werden können, da die Liegefläche entsprechend einfach errichtet bzw. entfernt werden kann und überdies platzsparend verstaut werden kann. Bei Nichtgebrauch der Liegefläche bzw. bei entsprechend sinngemäßen nicht errichteten Bett, insbesondere Bettgestell, kann das Sitzmöbel im Fahrbereich verwendet werden, beispielsweise wenn sich das Wohnmobil in bewegtem zustand, also in Fahrt, befindet.

Um zusätzliche Sicherheit, beispielsweise um ein Stürzen bzw. Hinausfallen von bzw. aus dem Bett, insbesondere Bettgestell zu verhindern, zu ermöglichen, kann in einer Ausgestaltung der Erfindung auch möglich sein, dass das Bett, insbesondere das Bettgestell und/oder eine auf dem Bett, insbesondere Bettgestell angeordnete Matratze einen wenigstens teilweise umlaufenden Rahmen zur seitlichen Begrenzung aufweist bzw. aufweisen.

Die Erfindung kann auch vorsehen, dass das Möbel als Einlegeboden für einen Schrank ausgestaltet ist. Hierdurch kann beispielsweise ein zusätzlicher Einlegeboden bereitgestellt werden, der bei Bedarf einfach aufgeblasen werden kann und bei Nichtgebrauch platzsparend verstaut werden kann.

Möglich kann im Rahmen der Erfindung auch sein, dass das Möbel als Raumtrennelement ausgebildet ist, wobei das Raumtrennelement vorzugsweise Wohnbereich und Fahrbereich raumtrennend angeordnet ist. Ein solches Raumtrennelement, das auch als Raumteiler aufgefasst werden kann, kann gleichermaßen bei Bedarf einfach aufgepumpt werden und bei Nichtgebrauch platzsparend verstaut werden.

Im Rahmen der Erfindung kann vorgesehen sein, dass das Möbel als Bett oder als Bettgestell ausgestaltet ist. Die vorstehenden sowie nachstehend ausgeführten Beschreibungen des Möbels können sich daher stets auf ein Bett oder auf ein Bettgestell mitlesen lassen.

Auch eine Kombination von Bett und Bettgestell kann hierunter aufgefasst werden. die Begriffe Bett bzw. Bettgestell sollen im Rahmen der Erfindung allgemein unter den Begriff Schlafmöbel im weiteren Sinne fallen.

Nachstehend wird die Erfindung anhand von Zeichnungen näher erläutert. Hierbei zeigt
- Fig. 1: eine stark vereinfachte schematische Darstellung eines drop-stitch Möbels eines ersten Ausführungsbeispiels, angeordnet in einem Fahrzeug,
- Fig. 2: eine stark vereinfachte schematische Darstellung eines drop-stitch Möbels eines weiteren Ausführungsbeispiels, angeordnet in einem Fahrzeug,
- Fig. 3: eine stark vereinfachte schematische Darstellung eines drop-stitch Möbels eines weiteren Ausführungsbeispiels, angeordnet in einem Fahrzeug und
- Fig. 4: eine stark vereinfachte schematische Darstellung eines drop-stitch-Möbels eines weiteren Ausführungsbeispiels, angeordnet in einem Fahrzeug.

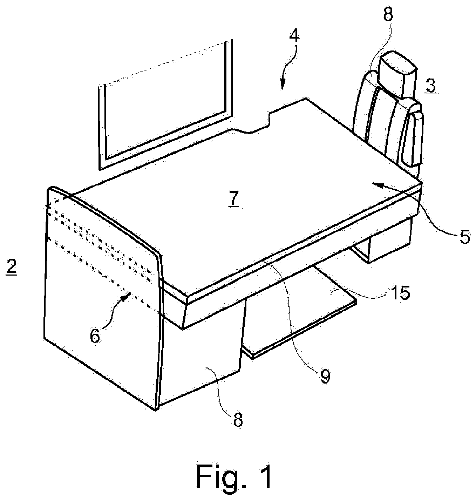

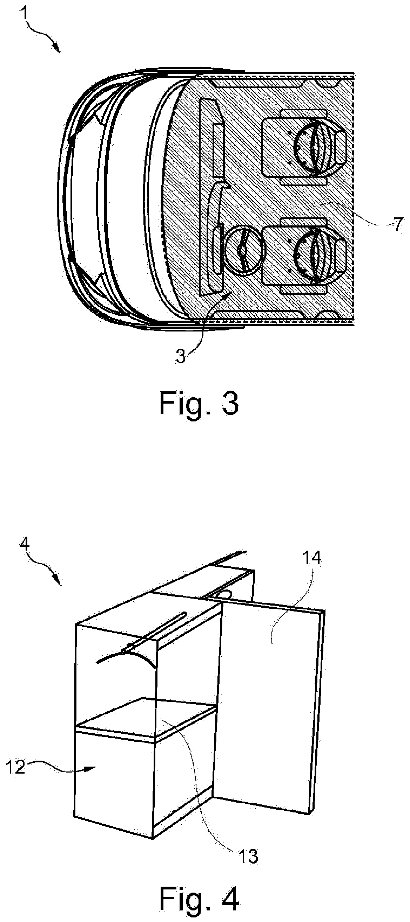

In der Fig. 1 ist ein erstes Ausführungsbeispiel eines Möbels 4 in einem Fahrzeug, nämlich einem Wohnmobil, Wohnwagen oder dergleichen Reise- oder Freizeitfahrzeug (siehe auch Fig. 3) gezeigt.

Das Fahrzeug ist im gezeigten Ausführungsbeispiel als ein Wohnmobil mit einem Wohnbereich 2 und einem Fahrbereich (siehe Fig. 3) ausgebildet. Das Möbel 4 ist aus einem drop-stitch Material gefertigt.

Damit ist das Möbel 4 als ein aufblasbares Möbel 4 gefertigt, das den Vorteil erhöhter Stabilität aufweist und bei Nichtgebrauch platzsparend verräumbar ist.

Das Möbel 4 ist als Bett 5 und insbesondere als Bettgestell 6 ausgebildet.

Im gezeigten Ausführungsbeispiel gemäß Fig. 1 bildet das Bett 5, bzw. das Bettgestell 6 im Wohnbereich 2 eine Liegefläche 7, die teilweise auf einem Sitzmöbel 8 des Wohnbereichs 2 und einem Sitzmöbel 8' des Fahrbereichs 3 angeordnet ist. Im gezeigten Ausführungsbeispiel ist zudem eine Matratze 9 umfasst, wobei die Matratze 9 als aufblasbare Matratze ausgebildet ist.

Die Liegefläche 7 wird von einer Matratze 9 gebildet, die auf dem drop-stitch Möbel 4 angeordnet ist.

Das Bett 5 kann auch so aufgefasst und gebildet werden, dass eine Matratze 9 auf dem Bettgestell 6 angeordnet ist.

Bettgestell 6 und Bett 5 können im Rahmen der Erfindung als eine Baugruppe aufgefasst werden. Bettgestell 6 und Bett 5 können im Rahmen der Erfindung auch ausgetauscht werden.

Bettgestell 6 und Bett 5 können im Rahmen der Erfindung auch als getrennte Bauteile aufgefasst werden.

In nicht näher dargestellter Art und Weise können Matratze 9 und Bett 5 bzw. Bettgestell 6 mittels wenigstens eines Befestigungsmittels lösbar miteinander verbunden sein.

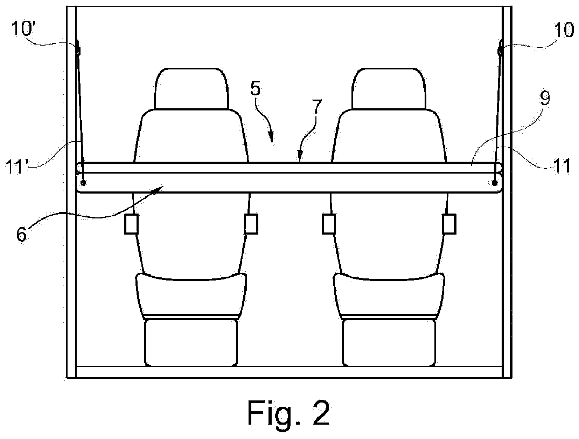

In Fig. 2 ist ein als Bett 5 bzw. Bettgestell 6 ausgebildetes Möbel gezeigt, bei dem Befestigungsmittel 10, 10' zum Befestigen des Möbels an dem Wohnmobil, Wohnwagen oder dergleichen Reise- oder Freizeitfahrzeug umfasst sind. Ferner umfassen Befestigungsmittel 10, 10' je Haltemittel 11, 11'.

In einem weiteren, nicht näher zeichnerisch dargestelltem Ausführungsbeispiel kann ein Wohnmobil, Wohnwagen oder dergleichen Reise- oder Freizeitfahrzeug vorgesehen sein, bei dem das Bett bzw. das Bettgestell an einem vorzugsweise aufklappbaren Schrank, insbesondere Oberschrank befestigt ist und bei dem das Bett bzw. das Bettgestell zur Bereitstellung einer Liegefläche zusätzlich an einem Haltemittel, das im Wohnmobil, Wohnwagen oder dergleichen Reise- oder Freizeitfahrzeug angeordnet ist, befestigt ist.

Im Ausführungsbeispiel gemäß Fig. 3 ist das Bett 5, insbesondere Bettgestell 6 derart im Fahrbereich 3 des Wohnmobils 1 angeordnet, dass eine Liegefläche 7 im Fahrbereich 3 ausgebildet ist, wobei vorzugsweise die Liegefläche 7 an die Geometrie des Fahrbereichs 3 angepasst ist.

Unter Geometrie kann hierbei auch die Kontur des Fahrbereichs verstanden und entsprechend bezeichnet werden.

In nicht näher gezeigter Art und Weise kann das Bett bzw. das Bettgestell und/oder eine auf dem Bett bzw. Bettgestell angeordnete Matratze einen wenigstens teilweise umlaufenden Rahmen zur seitlichen Begrenzung aufweist bzw. aufweisen. Ein besonderer Vorteil der Erfindung kann auch darin gesehen werden, dass große Spannweiten ohne zusätzliche Gestelle/Untergestelle/Bettgestelle überbrückt werden können.

So kann es in Anlehnung an Fig. 1 z.B. auch möglich sein, dass Bett 5 bzw. das Bettgestell 6 im Wohnbereich 2 ohne Anordnung auf einem Sitzmöbel 8, z.B. Tisch, des Wohnbereichs 2 bzw. einem Sitzmöbel 8' des Fahrbereichs 3 ausgestaltet ist.

Entsprechend kann es in Anlehnung an Fig. 2 vorgesehen sein, Bett 5 hängend anzuordnen und entsprechend zu befestigen.

Möglich kann aber auch eine Ausgestaltung mit Anordnung des Betts 5 bzw. Bettgestells 6 auf einem Möbel, beispielsweise einem Tisch 15, sein (siehe Fig. 1), etwa zur Bereitstellung einer verstärkten Auflagefläche.

In einem weiteren Ausführungsbeispiel gemäß Fig. 4 kann das Möbel 4 als Einlegeboden 13 insbesondere für einen Schrank 12 ausgestaltet sein. Ergänzend oder alternativ kann auch vorgesehen sein, dass das Möbel 4 als Raumtrennelement 14 ausgebildet ist, wobei das Raumtrennelement 14 vorzugsweise Wohnbereich und Fahrbereich (siehe Fig. 3) raumtrennend angeordnet ist.

## Patentansprüche

1. Wohnmobil, Wohnwagen oder dergleichen Reise- oder Freizeitfahrzeug (1) mit einem Wohnbereich (2) und/oder einem Fahrbereich (3),
wobei zumindest ein Möbel (4) umfasst ist, und das Möbel als Bettgestell ausgebildet ist,
**dadurch gekennzeichnet, dass**
das Möbel aus einem drop-stitch Material gefertigt ist oder wenigstens einen Bestandteil aufweist, der ein drop-stitch Material umfasst.

2. Wohnmobil, Wohnwagen oder dergleichen Reise- oder Freizeitfahrzeug nach Anspruch,
**wobei**
das Bettgestell (6) eine Matratze (9) umfasst, wobei die Matratze (9) als aufblasbare, insbesondere als selbstaufblasbare Matratze ausgebildet ist.

3. Wohnmobil, Wohnwagen oder dergleichen Reise- oder Freizeitfahrzeug (1) nach einem der vorangehenden Ansprüche,
**wobei**
das Möbel (4) wenigstens ein Befestigungsmittel (10, 10') zum Befestigen des Möbels (4) an dem Wohnmobil, Wohnwagen oder dergleichen Reise- oder Freizeitfahrzeug (1) umfasst.

4. Wohnmobil, Wohnwagen oder dergleichen Reise- oder Freizeitfahrzeug (1) nach Anspruch 3,
**wobei**
das Befestigungsmittel Ösen umfasst, die an dem Möbel (4) angeordnet sind und wobei das Befestigungsmittel (10, 10') ferner ein Haltemittel (11, 11'), insbesondere Halteband umfasst.

5. Wohnmobil, Wohnwagen oder dergleichen Reise- oder Freizeitfahrzeug (1) nach Anspruch 2,
**wobei**
die Matratze (9) und das Bettgestell (6) mittels wenigstens eines Befestigungsmittels lösbar miteinander verbunden sind, wobei das wenigstens eine Befestigungsmittel vorzugsweise ein Klettmaterial umfasst.

6. Wohnmobil, Wohnwagen oder dergleichen Reise- oder Freizeitfahrzeug (1) nach einem der vorangehenden Ansprüche ,
**wobei**
das Bettgestell (6) an einem vorzugsweisen aufklappbaren Schrank, insbesondere Oberschrank befestigt ist.

7. Wohnmobil, Wohnwagen oder dergleichen Reise- oder Freizeitfahrzeug (1) nach einem der vorangehenden Ansprüche,
**wobei**
das Bettgestell (6) zur Bereitstellung einer Liegefläche (7) zusätzlich an einem Haltemittel (11, 11'), das im Wohnmobil, Wohnwagen oder dergleichen Reise- oder Freizeitfahrzeug (1) angeordnet ist, befestigt ist.

8. Wohnmobil, Wohnwagen oder dergleichen Reise- oder Freizeitfahrzeug (1) nach einem der vorangehenden,
**wobei**
das Bettgestell (6) eine polygonale Form mit mindestens 6, bevorzugt 8, besonders bevorzugt 12 Ecken aufweist.

9. Wohnmobil, Wohnwagen oder dergleichen Reise- oder Freizeitfahrzeug (1) nach einem der vorangehenden Ansprüche,
**wobei**
das Bettgestell (6) derart im Fahrbereich (3) angeordnet ist, dass eine Liegefläche (7) im Fahrbereich (3) ausgebildet ist, wobei vorzugsweise die Liegefläche (7) an die Geometrie des Fahrbereichs (3) angepasst ist.

10. Wohnmobil, Wohnwagen oder dergleichen Reise- oder Freizeitfahrzeug (1) nach einem der vorangehenden Ansprüche,
**wobei**
das Bettgestell (6) im Wohnbereich (2) eine Liegefläche (7) bildet, die wenigstens teilweise auf einem Sitzmöbel (8) des Wohnbereichs (2), vorzugsweise Sitzbank, und einem Sitzmöbel (8') des Fahrbereichs (3), insbesondere Fahrersitz, angeordnet ist, insbesondere begrenzend angeordnet ist.

11. Wohnmobil, Wohnwagen oder dergleichen Reise- oder Freizeitfahrzeug (1) nach einem der vorangehenden Ansprüche,
**wobei**
das Bettgestell (6) und/oder eine auf dem Bettgestell (6) angeordnete Matratze (9) einen wenigstens teilweise umlaufenden Rahmen zur seitlichen Begrenzung aufweist bzw. aufweisen.

## Claims

1. Motorhome, caravan or similar travelling or recreational vehicle (1) with a living area (2) and/or a driver's cab (3),
wherein
at least one piece of furniture (4) is included, and the piece of furniture is designed as a bed frame,
**characterised in that**
the furniture is made from a drop-stitch material or has at least one component which comprises a drop-stitch material.

2. Motorhome, caravan or similar travelling or recreational vehicle as claimed,
wherein
the bed frame (6) comprises a mattress (9), wherein the mattress (9) is designed as an inflatable, in particular as a self-inflating mattress.

3. Motorhome, caravan or similar travelling or recreational vehicle (1) according to any of the preceding claims,
wherein
the piece of furniture (4) has at least one fastening means (10, 10') for fastening of the piece of furniture (4) on the motorhome, caravan or similar travel or recreational vehicle (1).

4. Motorhome, caravan or similar travelling or recreational vehicle (1) according to claim 3,
wherein
the fastening means comprises eyelets which are arranged on the piece of furniture (4) and wherein the fastening means (10, 10') further comprises a retaining means (11, 11'), in particular a retaining strap.

5. Motorhome, caravan or similar travelling or recreational vehicle (1) according to claim 2,
wherein
the mattress (9) and the bed frame (6) are detachably connected to one another by means of at least one fastening means, with the at least one fastening means preferably comprising a velcro material.

6. Motorhome, caravan or similar travelling or recreational vehicle (1) according to any of the preceding claims
wherein
the bed frame (6) is attached to a preferably foldable cupboard, in particular a wall cupboard.

7. Motorhome, caravan or similar travelling or recreational vehicle (1) according to one of the preceding claims,
wherein
the bed frame (6) is additionally attached to a holding means (11, 11') arranged in the motorhome, caravan or similar travelling or recreational vehicle (1) in order to provide a lying surface (7).

8. Motorhome, caravan or similar travelling or recreational vehicle (1) according to any of the foregoing,
wherein
the bed frame (6) has a polygonal shape with at least 6, preferably 8,
especially preferably 12 corners.

9. Motorhome, caravan or similar travelling or recreational vehicle (1) according to any of the preceding claims,
wherein
the bed frame (6) is arranged in the driver's cab (3) in such a way that a lying surface (7) is formed in the driver's cab (3), the lying surface (7) preferably being adapted to the geometry of the driver's cab (3).

10. Motorhome, caravan or similar travelling or recreational vehicle (1) according to any of the preceding claims,
wherein
the bed frame (6) forms a lying surface (7) in the living area (2), which is arranged at least partially on a seat (8) of the living area (2), preferably a bench seat, and a seat (8') in the driver's cab (3), in particular the driver's seat, and in particular is arranged in a bounding manner.

11. Motorhome, caravan or similar travelling or recreational vehicle (1) according to any of the preceding claims,
wherein
the bed frame (6) and/or a mattress (9) arranged on the bed frame (6) has an at least partially circumferential frame for lateral delimitation.

## Revendications

1. Caravane, camping-car ou véhicule de loisirs ou de tourisme (1) du même genre, avec une zone d'habitation (2) et/ou une zone de conduite (3),
qui comprend au moins un meuble (4), et le meuble est réalisé sous forme de châssis de lit,
**caractérisé en ce que**
le meuble est fabriqué à partir d'un matériau du type « drop stitch » ou qui présente au moins un composant comprenant un matériau du type « drop stitch ».

2. Caravane, camping-car ou véhicule de loisirs ou de tourisme du même genre selon la revendication 1,
dans lequel
le châssis de lit (6) comprend un matelas (9), le matelas (9) étant réalisé comme matelas gonflable, en particulier comme matelas auto-gonflant.

3. Caravane, camping-car ou véhicule de loisirs ou de tourisme (1) du même genre selon l'une quelconque des revendications précédentes,
dans lequel
le meuble (4) comprend au moins un moyen de fixation (10, 10') destiné à fixer le meuble (4) au niveau de la caravane, du camping-car ou du véhicule de loisirs ou de tourisme (1) du même genre.

4. Caravane, camping-car ou véhicule de loisirs ou de tourisme (1) du même genre selon la revendication 3,
dans lequel
le moyen de fixation comprend des œillets qui sont agencés au niveau du meuble (4), et dans lequel le moyen de fixation (10,10') comprend en outre un moyen de retenue (11, 11'), en particulier une bande de retenue.

5. Caravane, camping-car ou véhicule de loisirs ou de tourisme (1) du même genre selon la revendication 2,
dans lequel
le matelas (9) et le châssis de lit (6) sont connectés l'un à l'autre de manière détachable au moyen d'au moins un moyen de fixation, ledit au moins un moyen de fixation comprenant de préférence un matériau auto-agrippant.

6. Caravane, camping-car ou véhicule de loisirs ou de tourisme (1) du même genre selon l'une des revendications précédentes,
dans lequel
le châssis de lit (6) est fixé au niveau d'un placard de préférence rabattable, en particulier un placard haut.

7. Caravane, camping-car ou véhicule de loisirs ou de tourisme (1) du même genre selon l'une des revendications précédentes,
dans lequel
le châssis de lit (6), pour mettre à disposition une surface de couchage (7), est fixé en outre à un moyen de retenue (11, 11') qui est agencé dans la caravane, le camping-car ou le véhicule de loisirs ou de tourisme (1) du même genre.

8. Caravane, camping-car ou véhicule de loisirs ou de tourisme (1) du même genre selon l'une des revendications précédentes,
dans lequel
le châssis de lit (6) présente une forme polygonale avec au moins 6, de préférence 8, de toute préférence 12 coins.

9. Caravane, camping-car ou véhicule de loisirs ou de tourisme (1) du même genre selon l'une des revendications précédentes,
dans lequel
le châssis de lit (6) est agencé dans une zone de conduite (3) de telle sorte qu'une surface de couchage (7) est réalisée dans la zone de conduite (3), dans lequel de préférence la surface de couchage (7) est adaptée à la géométrie de la zone de conduite (3).

10. Caravane, camping-car ou véhicule de loisirs ou de tourisme (1) du même genre selon l'une des revendications précédentes,
dans lequel
le châssis de lit (6) forme une surface de couchage (7), dans la zone d'habitation (2), qui est agencée, en particulier agencée à des fins de délimitation, au moins en partie sur un meuble d'assise (8), de préférence une banquette, de la zone d'habitation (2), et sur un meuble d'assise (8'), en particulier un siège de conducteur., de la zone de conduite (3).

11. Caravane, camping-car ou véhicule de loisirs ou de tourisme (1) du même genre selon l'une quelconque des revendications précédentes,
dans lequel
le châssis de lit (6) et/ou un matelas (9) agencé sur le châssis de lit (6) présentent un cadre au moins en partie périphérique à des fins de délimitation latérale.
